# EUROPEAN PATENT APPLICATION

(11) **EP 4 245 661 A1**
(43) Date of publication of application: **20.09.2023**
(21) Application number: 22162706.0
(22) Date of filing: 17.03.2022
(51) Int. Cl.: B64C 39/02, H04B 7/06

(54) **METHODS AND APPARATUSES RELATING TO UAV COMMUNICATION**

(71) Applicant: Nokia Technologies Oy, 02610 Espoo (FI)
(72) Inventor: WIGARD, Jeroen, 9270 Klarup (DK); MEDEIROS DE AMORIM, Rafhael, 9000 Aalborg (DK); MOGENSEN, Preben Elgaard, 9260 Gistrup (DK); KOVÁCS, István Zsolt, 9000 Aalborg (DK); NG, Man Hung, Swindon, SN252JS (GB)
(74) Representative: Nokia EPO representatives

(57) **Abstract**

This specification describes an apparatus comprising means for: determining a radiation pattern of an antenna apparatus of an uncrewed aerial vehicle, UAV, based on measurements of signals transmitted, while the UAV is airborne, between the antenna apparatus of the UAV and at least one base station of a communications network; and causing storage of the determined radiation pattern for use in determining a UAV control strategy.

## Description

### Field

This specification relates generally to UAV communication.

### Background

Uncrewed aerial vehicles (UAVs), also referred to as 'drones' or 'unmanned aerial vehicles', operate in a wide range of environments throughout the world. UAV user equipment (UAV-UE) can communicate via networks to facilitate a variety of UAV tasks.

### Summary

In a first aspect, this specification describes an apparatus comprising means for determining a radiation pattern of an antenna apparatus of an uncrewed aerial vehicle, UAV, based on measurements of signals transmitted, while the UAV is airborne, between the antenna apparatus of the UAV and at least one base station of a communications network, and causing storage of the determined radiation pattern for use in determining a UAV control strategy.

In some examples, the measurements of the signals transmitted may correspond to respective orientations of the UAV during transmission of the signals between the antenna apparatus of the UAV and the at least one base station. In some examples, during transmission of the signals between the antenna apparatus of the UAV and the at least one base station, the UAV may be caused to rotate through the respective orientations. In some such examples, the UAV may be caused to rotate through the respective orientations by performing a complete rotation. In some such examples, performance of the complete rotation by the UAV may be verified using data from at least one sensor of an inertial measurement unit, IMU, of the UAV.

In some examples, a signal including information indicative of a value for use by the UAV in orienting the UAV during transmission of the signals between the antenna apparatus of the UAV and the at least one base station may be transmitted to the UAV. In some examples, the determination of the radiation pattern may be further based on information indicative of the respective orientations received from the UAV. In some examples, the measurements of the transmitted signals may comprise measurements of signals transmitted from the at least one base station and received at the antenna apparatus of the UAV, and the radiation pattern may be determined based on information received from the UAV that is indicative of the measurements of the signals transmitted from the at least one base station and received at the antenna apparatus of the UAV.

In some examples, the measurements of the transmitted signals may comprise measurements of signals transmitted from the antenna apparatus of the UAV and received at the at least one base station. In some examples, prior to the transmission of the signals between the antenna apparatus of the UAV and the at least one base station, the UAV may be caused to manoeuvre into line-of-sight of the at least one base station. In some examples, the means may be further configured for performing retrieving the stored radiation pattern and determining, using the retrieved radiation pattern, the UAV control strategy. In some examples, determining the UAV control strategy may include one or more of: selecting a UAV serving cell, determining a UAV quality-of-service prediction, determining a UAV route, determining a UAV orientation, determining a level of UAV uplink interference, and/or determining a level of UAV downlink interference.

In some examples, during the transmission of the signals between the antenna apparatus of the UAV and the at least one base station, the UAV may be caused to manoeuvre from a first height to a second height. In some such examples, the measurements of the transmitted signals may comprise a first plurality of measurements of the transmitted signals performed while the UAV is at the first height, the measurements of the first plurality corresponding to respective orientations of the UAV during the transmission of the signals between the antenna apparatus of the UAV and the at least one base station, and a second plurality of measurements of the transmitted signals performed while the UAV is at the second height, the measurements of the second plurality corresponding to the respective orientations.

In some examples, the measurements of the signals transmitted between the antenna apparatus of the UAV and the at least one base station may include a measurement of a signal transmitted between the antenna apparatus of UAV and a first base station of the at least one base station, and a measurement of a signal transmitted between the antenna apparatus of the UAV and a second base station of the at least one base station. In some examples, the antenna apparatus of the UAV may have a plurality of beams, and the measurements of the signals transmitted between the antenna apparatus of the UAV and the at least one base station may include a measurement of a signal transmitted between the antenna apparatus of the UAV and the at least one base station via a first beam of the plurality of beams, and a measurement of a signal transmitted between the antenna apparatus of the UAV and the at least one base station via a second beam of the plurality of beams.

The signals transmitted between the at least one base station and the UAV may be radio frequency (RF) signals. In some examples, the measurements may include one or more of: power measurements, path loss measurements, quality measurements, reference signal received power measurements, reference signal received quality measurements, and/or received signal strength indicator measurements.

In some examples, a signal including information indicative of a reference orientation may be transmitted between the UAV and the at least one base station, and the UAV may be caused to manoeuvre such that an initial orientation of the respective orientations corresponds to the reference orientation.

In a second aspect, this specification describes an apparatus comprising at least one processor and at least one memory including computer program code, the at least one memory and the computer program code being configured to, with the at least one processor, cause the apparatus at least to perform: determining a radiation pattern of an antenna apparatus of an uncrewed aerial vehicle, UAV, based on measurements of signals transmitted, while the UAV is airborne, between the antenna apparatus of the UAV and at least one base station of a communications network, and causing storage of the determined radiation pattern for use in determining a UAV control strategy.

In some examples, the measurements of the signals transmitted may correspond to respective orientations of the UAV during transmission of the signals between the antenna apparatus of the UAV and the at least one base station. In some examples, during transmission of the signals between the antenna apparatus of the UAV and the at least one base station, the UAV may be caused to rotate through the respective orientations. In some such examples, the UAV may be caused to rotate through the respective orientations by performing a complete rotation. In some such examples, performance of the complete rotation by the UAV may be verified using data from at least one sensor of an inertial measurement unit, IMU, of the UAV.

In some examples, a signal including information indicative of a value for use by the UAV in orienting the UAV during transmission of the signals between the antenna apparatus of the UAV and the at least one base station may be transmitted to the UAV. In some examples, the determination of the radiation pattern may be further based on information indicative of the respective orientations received from the UAV. In some examples, the measurements of the transmitted signals may comprise measurements of signals transmitted from the at least one base station and received at the antenna apparatus of the UAV, and the radiation pattern may be determined based on information received from the UAV that is indicative of the measurements of the signals transmitted from the at least one base station and received at the antenna apparatus of the UAV.

In some examples, the measurements of the transmitted signals may comprise measurements of signals transmitted from the antenna apparatus of the UAV and received at the at least one base station. In some examples, prior to the transmission of the signals between the antenna apparatus of the UAV and the at least one base station, the UAV may be caused to manoeuvre into line-of-sight of the at least one base station. In some examples, the at least one memory and the computer program code may be configured to, with the at least one processor, cause the apparatus at least to further perform: retrieving the stored radiation pattern and determining, using the retrieved radiation pattern, the UAV control strategy. In some examples, determining the UAV control strategy may include one or more of: selecting a UAV serving cell, determining a UAV quality-of-service prediction, determining a UAV route, determining a UAV orientation, determining a level of UAV uplink interference, and/or determining a level of UAV downlink interference.

In some examples, during the transmission of the signals between the antenna apparatus of the UAV and the at least one base station, the UAV may be caused to manoeuvre from a first height to a second height. In some such examples, the measurements of the transmitted signals may comprise a first plurality of measurements of the transmitted signals performed while the UAV is at the first height, the measurements of the first plurality corresponding to respective orientations of the UAV during the transmission of the signals between the antenna apparatus of the UAV and the at least one base station, and a second plurality of measurements of the transmitted signals performed while the UAV is at the second height, the measurements of the second plurality corresponding to the respective orientations.

In some examples, the measurements of the signals transmitted between the antenna apparatus of the UAV and the at least one base station may include a measurement of a signal transmitted between the antenna apparatus of UAV and a first base station of the at least one base station, and a measurement of a signal transmitted between the antenna apparatus of the UAV and a second base station of the at least one base station. In some examples, the antenna apparatus of the UAV may have a plurality of beams, and the measurements of the signals transmitted between the antenna apparatus of the UAV and the at least one base station may include a measurement of a signal transmitted between the antenna apparatus of the UAV and the at least one base station via a first beam of the plurality of beams, and a measurement of a signal transmitted between the antenna apparatus of the UAV and the at least one base station via a second beam of the plurality of beams.

In some examples, the measurements may include one or more of: power measurements, path loss measurements, quality measurements, reference signal received power measurements, reference signal received quality measurements, and/or received signal strength indicator measurements.

In some examples, a signal including information indicative of a reference orientation may be transmitted between the UAV and the at least one base station, and the UAV may be caused to manoeuvre such that an initial orientation of the respective orientations corresponds to the reference orientation.

In a third aspect, this specification describes a radio access network or a core network entity comprising an apparatus as described above with reference to the first or second aspects.

In a fourth aspect, this specification describes a method comprising determining a radiation pattern of an antenna apparatus of an uncrewed aerial vehicle, UAV, based on measurements of signals transmitted, while the UAV is airborne, between the antenna apparatus of the UAV and at least one base station of a communications network and causing storage of the determined radiation pattern for use in determining a UAV control strategy.

The method may further include any of the operations described above with reference to the first or second aspects.

In a fifth aspect, this specification describes a method comprising causing transmission from a base station to an uncrewed aerial vehicle, UAV, of a signal including information indicative of a value for use by the UAV in orienting the UAV during transmission, while the UAV is airborne, between an antenna apparatus of the UAV and at least one base station of a communications network, of signals for use in determining a radiation pattern of the antenna apparatus of the UAV.

The transmitted signals may comprise signals transmitted from the at least one base station to the antenna apparatus of the UAV. In addition, information indicative of measurements of the transmitted signals may be received from the UAV for use in determining the radiation pattern of the antenna apparatus of the UAV.

In a sixth aspect, this specification describes a method comprising receiving at a communications network from an uncrewed aerial vehicle, UAV, information indicative of measurements of signals transmitted, while the UAV is airborne, from at least one base station of the communications network to an antenna apparatus of the UAV, the measurements being for use in determining a radiation pattern of the antenna apparatus of the UAV.

The method may further comprise causing transmission, from the at least one base station to the UAV, of a signal including information indicative of a value for use by the UAV in orienting the UAV during the transmission of the signals from the at least one base station to the antenna apparatus of the UAV.

In a seventh aspect, this specification describes an apparatus comprising means for performing any of the operations described above with reference to the fifth and sixth aspects.

In an eighth aspect, this specification describes an apparatus comprising at least one processor and at least one memory including computer program code, the at least one memory and the computer program code configured to, with the at least one processor, cause the apparatus at least to perform any of the operations described above with reference to the fifth and sixth aspects.

In a ninth aspect, this specification describes a non-transitory computer readable medium comprising program instructions stored thereon for performing at least any of the operations described above with reference to the first to eighth aspects.

In a tenth aspect, this specification describes an uncrewed aerial vehicle, UAV, comprising at least one processor and at least one memory including computer program code, the at least one memory and the computer program code being configured to, with the at least one processor, cause the UAV at least to perform: measuring signals received at an antenna apparatus of the UAV from at least one base station while the UAV is airborne, the measurements of the signals corresponding to respective orientations of the UAV, relative to the at least one base station, during receipt of the signals, and sending to a communications network information indicative of the measurements for use in determining a radiation pattern of the antenna apparatus of the UAV.

In an eleventh aspect, this specification describes an uncrewed aerial vehicle, UAV, comprising at least one processor and at least one memory including computer program code, the at least one memory and the computer program code being configured to, with the at least one processor, cause the UAV at least to perform: transmitting signals from at an antenna apparatus of the UAV to at least one base station while the UAV is airborne, the transmitted signals corresponding to respective orientations of the UAV, relative to the at least one base station, during transmission of the signals and being for use in determining a radiation pattern of the antenna apparatus of the UAV.

As will be appreciated, the UAVs of the tenth and eleventh aspects may further be configured to perform other operations described herein, not least a number of those described with reference to the UAVs described in connection with the first to ninth aspects.

As mentioned above in relation to the first aspect, it will be appreciated that in all of the above aspects, signals transmitted between the at least one base station and the UAV may be radio frequency (RF) signals. Accordingly, the measurements may be measurements of the RF signals.

### Brief description of the figures

For better understanding of the present application, reference will now be made by way of example to the accompanying drawings in which:
Figure 1 is an example of an uncrewed aerial vehicle and a radiation pattern;
Figure 2 is an example of an uncrewed aerial vehicle and base station;
Figures 3 and 4 are example message flow sequences;
Figure 5 is an example of an uncrewed aerial vehicle and a plurality of base stations;
Figures 6 and 7 are flow charts illustrating various operations which may be performed in accordance with examples described herein;
Figure 8 is a schematic illustration of an example configuration of a computing apparatus which may be configured to perform various operations described with reference to Figures 1 to 7;
Figure 9 is a schematic illustration of an example configuration of a base station which may be configured to perform various operations described with reference to Figures 1 to 7;
Figure 10 is a schematic illustration of an example configuration of an uncrewed aerial vehicle which may be configured to perform various operations described with reference to Figures 1 to 7;
Figure 11 is an illustration of a computer-readable medium upon which computer readable code may be stored.

### Detailed description

In the description and drawings below, like reference numerals refer to like elements throughout.

There exists a potential for interference when uncrewed aerial vehicle UEs (UAV-UEs) communicate via communications networks. In particular, a UAV-UE in the air tends to be visible to more base stations of the network and so may experience more interference of signals received at the UAV-UE (i.e. in a 'downlink' direction) and/or may cause more interference due to signals transmitted from the UAV-UE (i.e. in the 'uplink' direction). Since more base stations are visible to the UAV-UE, there may also be more handover candidates. This can lead to more frequent handovers if the same settings are used as for ground-based user equipment (UE).

Implementations of the technology described herein relate to determination of a radiation pattern of an antenna apparatus of a UAV-UE and may enable accurate determination of such radiation patterns. This maybe achieved, at least in part, by determining antenna apparatus radiation patterns when the UAV is airborne, rather than when the UAV is, for instance, in an anechoic chamber or on the ground. Determination of radiation patterns when airborne may allow potential effects relating to the manner in which the antenna apparatus is mounted to the UAV, the shape or construction of the UAV itself, the presence of other UAV payloads and/or other radiation propagation effects (e.g. but not limited to ground reflections) to be taken into account. As such, the determined radiation pattern may, in some examples, be referred to as an 'effective' radiation pattern. The determined radiation pattern may be used to provide beneficial technical effects such as, but not limited to, reducing interference and/or the number of handovers performed by UAV-UEs, and/or enabling a larger volume of UAV flights to take place safely and efficiently.

In some examples, the term 'radiation pattern' (also referred to as an 'antenna pattern') may refer to the directional/angular dependence of the strength of signals (e.g. radio waves) transmitted or received at an antenna apparatus.

For instance, a radiation pattern may associate values for a metric such as one or more of a power, amplitude, gain/directive gain, sensitivity, beamwidth, or other suitable quantities with respective directions. In some examples, one or more of the respective directions may comprise two-dimensional angles (e.g. but not limited to azimuth angles or elevation angles). In some examples, one or more of the respective directions may comprise three-dimensional angles (e.g. but not limited to pairs of azimuth and elevation angles). In some examples, the associated values and respective directions may be stored in a tabular data set. In some examples, a radiation pattern may include an indication of one or more directions associated with the greatest and/or lowest values for the metric. In other examples, a radiation pattern may be used to determine such an indication.

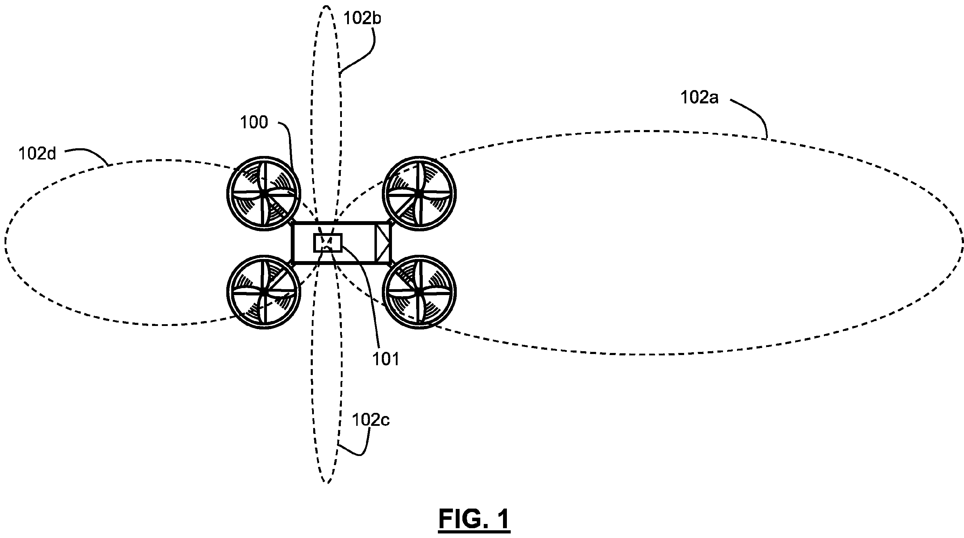

In Figure 1, by way of example only, a UAV 100 having antenna apparatus 101 is shown together with a corresponding radiation pattern 102a-d indicated by superposed dashed lines. Whilst, in this non-limiting example, the radiation pattern 102a-d of antenna apparatus 100 is illustrated as having a main lobe 102a, back lobe 102d, and side lobes 102 b and 102c, it will be appreciated that different numbers and relative sizes of lobes maybe present in such radiation patterns. In some examples, one or more of the lobes may correspond to respective beams of the antenna apparatus 101. In some such examples, the beams may correspond to respective antennas of the antenna apparatus 101.

In some examples, a UAV may use a different antenna or antenna apparatus for transmitting and receiving. In some such examples, either or both of a 'transmitting pattern' and 'receiving pattern' may be determined for the respective antennas or antenna apparatuses. In some examples, an antenna apparatus of a UAV may comprise one or more directional antennas.

In some examples, information received via a downlink signal (e.g. a C2 link) is used in controlling the UAV. The downlink may comprise a low bitrate channel (e.g. but not limited to less than 100 kbps), having high reliability (e.g. but not limited to 99.9% reliability, with a delay budget of 50 ms). On the other hand, an uplink signal may be used to carry application data, such as data from cameras and/or other sensors of the UAV. As such, the uplink may comprise a high bitrate channel (e.g. but not limited to more than 10 Mbps).

As noted above, transmission of uplink signals from in-flight UAVs may cause interference in one or more neighbouring cells. To reduce such interference, the UAV may employ beamforming. In particular, it may be beneficial for the UAV to point the uplink beam in the direction of an empty or almost empty cell, thereby reducing or even eliminating interference caused in other directions. Knowledge of the radiation pattern of the antenna apparatus of the UAV may allow for a determination of how to orient the UAV in order to direct the uplink beam at a particular cell. It may also or alternatively facilitate an accurate determination of how much interference may be caused in each direction. Knowledge of how much interference may be caused in each direction may be used to reduce interference with other UEs (including other UAV-UEs).

As to the downlink signals, high reliability may be particularly important. For instance, in some settings, a UAV may not be allowed to take off unless there is sufficient confidence that adequate downlink reliability will be achieved along a route to be followed by the UAV. Accordingly, a quality of service (QoS) prediction may be determined for the route or for various points along the route. Knowledge of the radiation pattern of the antenna apparatus of the UAV may be used for determining reliability predictions and/or UAV routes, thereby potentially enabling many more UAV flights to take place.

As noted above, an airborne UAV-UE may experience an increased frequency of handovers as compared to ground-based UEs. To reduce such handovers, it may be beneficial for the UAV to select a 'best' handover candidate as the serving cell (for instance, based on reference signal received power, RSRP) and to maintain connection with the serving cell for a longer period of time before the next handover. Knowledge of the radiation pattern of the antenna apparatus of the UAV may allow for a connection with the serving cell to be maintained for longer. For instance, knowledge of the directional dependence of antenna gain may allow for a connection to be maintained for a longer time as compared to the case of using an omnidirectional UAV antenna apparatus. In addition or alternatively, knowledge of the radiation pattern of the antenna apparatus of the UAV may facilitate a more accurate determination of a 'best' handover candidate cell, thereby potentially reducing the number of handovers that occur.

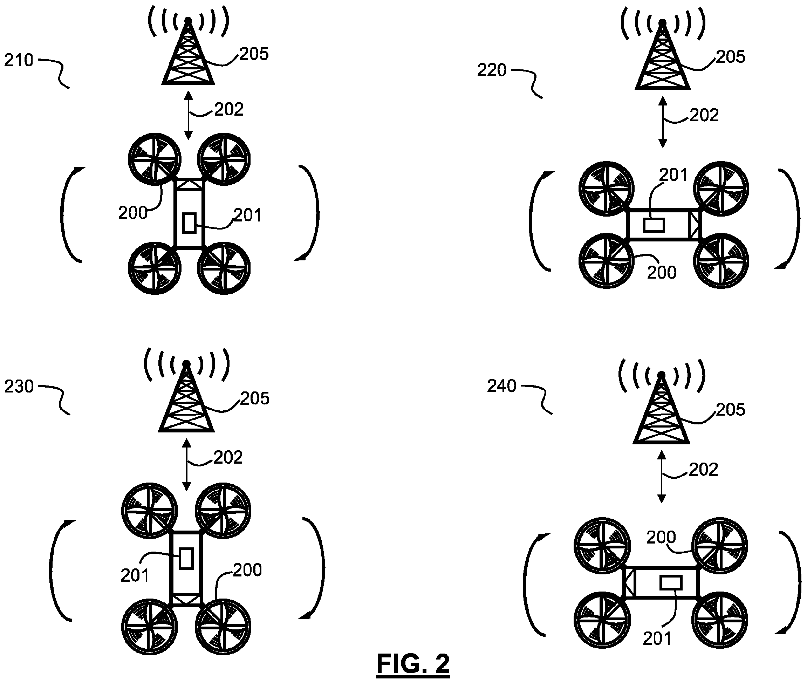

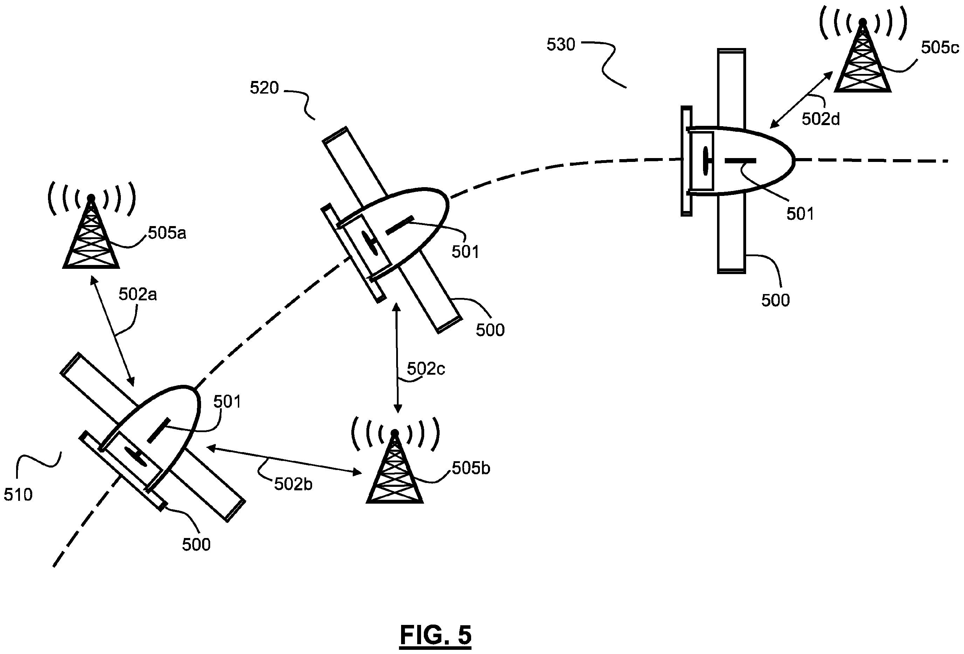

Various methods and apparatuses are described in detail below, by way of example only, in the context of a cellular network, such as an Evolved Universal Terrestrial Radio Access (E-UTRA) network or a 5G network. However, it will be appreciated that the techniques may be applicable with cellular networks of other types, as well as to other types of communications network which include multiple base stations or access points with which a UAV may communicate. The cellular network described herein comprises one or more base stations or access points (e.g. but not limited to gNBs and/or eNBs). Whilst a small number of base stations is depicted in Figures 2 and 5, a radio access network (RAN, NG-RAN) may typically comprise thousands of such base stations. Together, the base stations may provide cellular network coverage to one or more UEs over a wide geographical area.

In some implementations and, for instance, depending on the characteristics of the cellular network, the base stations and UEs within the network may be configured to communicate with one another, for instance, using an OFDM-based access scheme, such as orthogonal frequency division multiple access (OFDMA) and/or single carrier frequency division multiple access (SC-FDMA). For instance, in some non-limiting examples, OFDMA may be used for downlink communications whereas SC-FDMA may be used for uplink communications.

In the example of Figure 2, a UAV 200 is shown in communication with at least one base station 205 of a cellular network. In particular, the UAV and the base station may communicate via transmission of signals 202 (e.g. but not limited to radio signals) between an antenna apparatus 201 of UAV 200 and at least one base station 205 while UAV 200 is airborne. A radiation pattern of antenna apparatus 201 of UAV 200 is determined based on measurements (e.g. but not limited to power measurements) of the transmitted signals 202. In some examples, the transmitted signals 202 may comprise signals transmitted from antenna apparatus 201 of UAV 200 and received at at least one base station 205. In other examples, the transmitted signals 202 may comprise signals transmitted from at least one base station 205 and received at antenna apparatus 201 of UAV 200. As will of course be appreciated, in some examples UAV 200 may communicate with at least one base station 205 when UAV 200 is on the ground, prior to take-off. In some such examples UAV 200 may for instance be controlled (e.g. caused to take-off) via base station 205. For instance, a take-off of UAV 200 may be triggered via a signal received from base station 205.

In Figure 2, UAV 200 is illustrated as a quadcopter. However, it will of course be appreciated that UAV 200 may instead be a fixed-winged aircraft, helicopter, multicopter (such as a tricopter, hexacopter or octocopter), ornithopter, gyrocopter, balloon or other aircraft. Moreover, whilst at least one base station 205 is depicted as a radio mast in Figure 2, it will be appreciated that at least one base station 205 may instead comprise one or more base stations, each comprising at least one transmitter, receiver, and/or transceiver, implemented using one or more antennas (e.g. an antenna array). In some examples, antenna(s) of at least base station 205 may have one or more transmit beams and/or one or more receive beams. For instance, beams of the antenna(s) of at least one base station 205 may be steered towards UAV 200, thereby to improve a signal strength and/or signal-to-interference-plus-noise ratio (SINR) of signals (e.g. but not limited to signals 202) transmitted between at least one base station 205 and antenna apparatus 201 of UAV 200. In some such examples, information indicative of the beams of the antenna(s) of at least one base station 205 and their respective orientations may be used in the determination of the radiation pattern.

In some examples, the measurements of the transmitted signals 202 may correspond to respective orientations of UAV 200 during transmission of the signals 202 between the antenna apparatus 201 of UAV 200 and at least one base station 205. In other words, measurement(s) of the transmitted signals 202 may be performed at a plurality of orientations of UAV 200. For instance, at least one measurement may be performed when the UAV 200 is at each of plural different orientations. In the case that the signals 202 are transmitted from antenna apparatus 201 of UAV 200 and received at at least one base station 205, these measurements may be performed at the at least one base station 205. In the case that the signals 202 are transmitted from at least one base station 205 and received at antenna apparatus 201 of UAV 200, these measurements may be performed at UAV 200. In this latter case, information indicative of the measurements of the signals 202 may be transmitted from UAV 200 (e.g. to at least one base station 205) for use in determining the radiation pattern.

In some examples, a first subset of the transmitted signals 202 may be transmitted from antenna apparatus 201 of UAV 200 and received at at least one base station 205, and a second subset of the transmitted signals 202 may be transmitted from at least one base station 205 and received at antenna apparatus 201 of UAV 200. In this case, measurements of the first subset of the transmitted signals 202 may be performed at the at least one base station 205, measurements of the second subset of the transmitted signals 202 may be performed at UAV 200, and information indicative of the measurements of the second subset of the transmitted signals 202 may be transmitted from UAV 200 (e.g. to at least one base station 205) for use in determining the radiation pattern. In some such examples, the first subset of the transmitted signals and the second subset of the transmitted signals may correspond to the same respective orientations of UAV 200 during transmission of the signals 202. In other such examples, the first subset of the transmitted signals and the second subset of the transmitted signals may correspond to different sets of respective orientations of UAV 200 during transmission of the signals 202. For instance, UAV 200 may alternate between transmitting signals of the first subset and receiving signals of the second subset at successive orientations (e.g. but not limited to, as UAV 200 rotates).

In some examples, multiple measurements may be performed when the UAV 200 is at each of plural different orientations. In some such examples, a final measurement for one or more of the plural different orientations may be determined (e.g. but not limited to, a minimum, maximum, mean, median or mode of the multiple measurements). In addition or alternatively, the multiple measurements may be used for determining the radiation pattern.

In Figure 2, by way of example only, UAV 200 is shown airborne due south of at least one base station 205, and is illustrated in each of orientations 210, 220, 230 and 240 respectively. In orientation 210, UAV 200 is oriented due north, and signals 202a are transmitted between antenna apparatus 201 of UAV 200 and at least one base station 205. In orientation 220, UAV 200 is oriented due east, and signals 202b are transmitted between antenna apparatus 201 of UAV 200 and at least one base station 205. In orientation 230, UAV 200 is oriented due south, and signals 202c are transmitted between antenna apparatus 201 of UAV 200 and at least one base station 205. In orientation 240, UAV 200 is oriented due west, and signals 202d are transmitted between antenna apparatus 201 of UAV 200 and at least one base station 205.

In some examples, during transmission of the signals 202 between the antenna apparatus 201 of UAV 200 and at least one base station 205, UAV 200 may be caused to rotate through the respective orientations. In some examples, UAV 200 may be caused to rotate through the respective orientations by performing substantially a complete rotation. As depicted by arrows in Figure 2, UAV 200 may be caused to rotate through orientations 210, 220, 230 and 240. In some examples, UAV 200 may be caused to perform a complete rotation through 360 degrees, both starting and ending in orientation 210. In some examples, performance of a complete rotation (or partial rotation) may be verified using data from at least one sensor of an inertial measurement unit (IMU) of UAV 200. This verification may be performed by UAV 200, or may be performed by an uncrewed aircraft system (UAS) traffic management (UTM) or UAS service supplier (USS), either or both of which may have full access to UAV IMU sensor data. Although Figure 2 shows the UAV 200 at four different orientations, it will be appreciated that measurements may be taken at any number of orientations that is sufficient for obtaining a sufficiently accurate determination of the radiation pattern. For instance, and not limited to, the measurements may be taken at five, ten, fifteen, twenty, thirty, forty-five or ninety degree intervals.

In some implementations, a signal including information indicative of a value for use by UAV 200 in orienting UAV 200 during transmission of the signals between antenna apparatus 201 of UAV 200 and the at least one base station 205 may be transmitted to UAV 200 (e.g. from the base station, or from UTM/USS). For instance, the value for use by UAV 200 in orienting UAV 200 may indicate a desired angular/rotational movement (e.g. but not limited to 5 degrees) between orientations of UAV 200. Put another way, the value may indicate the angular intervals at which measurements are to be performed. This value may be conveyed in any appropriate way, such as one or more of an angle of rotation, a number of subdivisions of a complete revolution, an angular speed of the UAV, a time interval between measurements, a list of measurement angles etc.

In addition or alternatively, a signal including information indicative of a reference orientation may be transmitted between UAV 200 and at least one base station 205. The UAV 200 may be caused to manoeuvre such that an initial orientation of the respective orientations corresponds to the reference orientation. For example, the reference orientation may be defined relative to the base station (e.g. directly towards/away from the base station), a compass bearing/heading/cardinal direction (e.g. 090 degrees), a landmark etc. Put another way, UAV 200 and at least one base station 205 may 'agree' upon a reference orientation prior to commencing the rotating/measuring process.

In some examples, the determination of the radiation pattern may be further based on information indicative of the respective orientations received from the UAV 200 (e.g. at at least one base station 205). For example, this information may include an angle of rotation, a number of subdivisions of a complete revolution, an angular speed of the UAV, a time interval between measurements, a list of measurement angles, a list of identifiers and/or other information. In other examples, the respective orientations of UAV 200 may be inferred at the network, for instance based on instructions sent to UAV 200, observations of UAV 200 and/or data from an IMU of UAV 200.

The measurements of the transmitted signals 202 may, in some examples, include one or more of: power measurements, path loss measurements, reference signal received power measurements, and/or received signal strength indicator measurements.

In some examples, during the transmission of the signals 202 between antenna apparatus 201 of UAV 200 and the at least one base station 205, UAV 200 may be caused to manoeuvre from a first height to a second height. In such examples, the measurements of the transmitted signals may comprise a first plurality of measurements of the transmitted signals taken while the UAV is at the first height, at least one measurement of the first plurality corresponding to a respective orientation of the UAV during the transmission of the signals between the antenna apparatus of the UAV and the at least one base station, and a second plurality of measurements of the transmitted signals taken while the UAV is at the second height, at least one measurement of the second plurality corresponding to one of the respective orientations. By manoeuvring UAV 200 vertically in this way, it may be possible to obtain knowledge of the vertical radiation pattern of antenna apparatus 201. In addition or alternatively, UAV 200 may be pitched in a horizontal axis for successive steps while rotating. For instance, UAV 200 may rotate X (e.g. 5) degrees horizontally and tilt Y (e.g. 10) degrees upwards, then rotate a further X degrees horizontally and tilt Y degrees downwards, and so on until the UAV 200 has performed a substantially complete horizontal rotation. In this way, it may also possible to obtain knowledge of the vertical radiation pattern of antenna apparatus 201, while the UAV remains at one height.

In some examples, the measurements of the signals transmitted between antenna apparatus 201 of UAV 200 and the at least one base station 205 may include at least one measurement of signals transmitted between antenna apparatus 201 of UAV 200 and a first base station of the at least one base station 205, and at least one measurement of signals transmitted between antenna apparatus 201 of UAV 200 and a second base station of the at least one base station 205. This situation is further described with reference to Figure 5 below.

The antenna apparatus 201 of UAV 200 may have a plurality of beams. For instance, each beam of the plurality of beams may correspond to a respective antenna of the antenna apparatus 201. The measurements of the transmitted signals may include a measurement(s) of a signal (or signals) transmitted between the antenna apparatus of the UAV and the at least one base station via a first beam of the plurality of beams, and a measurement(s) of a signal (or signals) transmitted between the antenna apparatus of the UAV and the at least one base station via a second beam of the plurality of beams. In some examples, a radiation pattern maybe determined for all or a subset of the beams together. In addition or alternatively, an individual radiation pattern for each beam may be determined.

As described above, a radiation pattern of antenna apparatus 201 of UAV 200 is determined based on the measurements of the transmitted signals 202. The determined radiation pattern is then stored for use in determining a UAV control strategy (e.g. but not limited to determining whether a UAV is allowed to take off or determining a route for UAV 200 to follow). For instance, the radiation pattern may be stored together with a UAV identifier (ID) in a database. In some examples, this database may be maintained by a core network (CN) entity (such as UTM, USS, or a server). The stored radiation pattern maybe provided upon request by the UTM or USS, thereby allowing for re-use of this information when the UAV 200 (or a similar UAV) is flown in similar radio environments. The stored radiation pattern maybe used when operating the specific UAV 200 for which the radiation pattern was determined. In some examples, the stored radiation pattern may be used when operating UAVs of the same type as UAV 200. In some examples, the radiation pattern maybe periodically re-determined. In some of those examples, the re-determined radiation pattern may be compared with a previous radiation pattern to verify consistency of UAV radio modem behaviour.

In some examples, determining the UAV control strategy may include one or more of: selecting a UAV serving cell, determining a UAV quality-of-service (QoS) prediction, determining a UAV route, determining a UAV orientation, determining a level of UAV uplink interference, and/or determining a level of UAV downlink interference. For instance, a UAV may not be allowed to take off unless a threshold QoS exists for a planned UAV route.

In some examples, the UAV control strategy may include one or more of: a UAV route, a UAV waypoint, a UAV speed, a UAV rotation speed, a UAV heading, a UAV orientation, a UAV altitude, a UAV take-off time, a UAV landing time, a UAV transmission power, a UAV transmission frequency, a UAV control frequency, a UAV serving cell etc.

In some examples, determining the UAV control strategy using the determined radiation pattern may be such as to reduce, minimise or even eliminate interference caused by and/or experienced by UAV 200.

For instance, the determined radiation pattern may be used to identify a QoS at one or more locations within a geographic area. In this case, a control strategy which includes a UAV route or waypoint may be determined based on a subset of the one or more locations meeting a QoS threshold.

In addition or alternatively, observed, planned or predicted actions of another UE (such as another UAV-UE) operating in a geographic vicinity of UAV 200 may be used to determine a control strategy for manoeuvring UAV 200 that reduces interference caused by and/or experienced by UAV 200. For instance, a UAV take-off time or landing time may be chosen such that the other UE is not operating while UAV 200 is airborne. In some examples, a control strategy including one or more of a UAV route, waypoint, speed, heading, orientation, or rotation speed may be determined using the radiation pattern such that a main lobe of the determined radiation pattern of antenna apparatus 101 does not point towards the other UE during operation.

In some examples, the determined radiation pattern may be used to determine a base station radio resource scheduling policy. For instance, a scheduling rate could be increased or decreased thereby to reduce interference caused by or experienced by UAV 200. This may be considered a determination of a UAV control strategy, not least in that the UAV 200 may be caused to operate in accordance with the determined base station radio resource scheduling policy.

In some examples, determining the UAV control strategy using the determined radiation pattern may be such as to reduce the number of handovers performed by UAV 200. For instance, a UAV serving cell may be identified as a candidate cell having a 'best' signal measurement (e.g. but not limited to RSRP) as calculated using the determined radiation pattern. In some examples, the determined radiation pattern may be used to position the UAV such that a main lobe of the radiation pattern points towards the serving cell, thereby potentially allowing for connection to be maintained for a longer period of time and reducing the number of handovers.

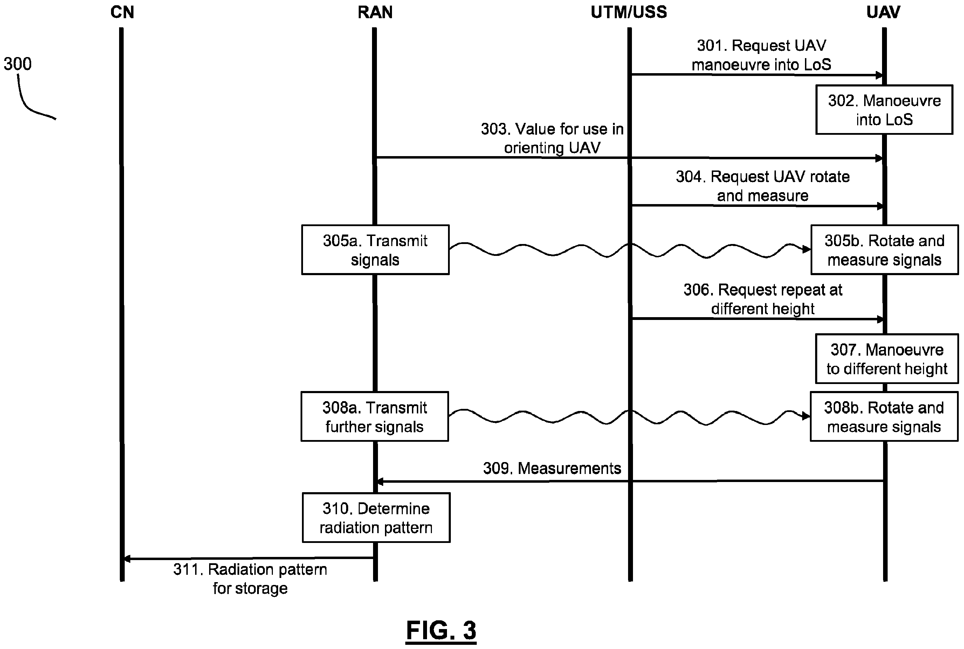

Figure 3 is a message flow sequence, indicated generally by the reference numeral 300, in accordance with some examples of the described technology. The message flow sequence 300 shows an example implementation of aspects of a process such as that described with reference to Figure 2 above.

The message flow sequence 300 shows a signalling procedure between a core network (CN), a radio access node (RAN), an uncrewed aircraft system (UAS) traffic management (UTM) and a UAV. In some examples, the UAV may be under the control of the UTM, UAS service supplier (USS) and/or a UAV controller. The UAV and the RAN may, for example, be the UAV 200 and at least one base station 205 of the process described with reference to Figure 2 above.

Whilst various operations are described below as being performed by the UTM or USS, in some examples some or all of these operations may be performed by RAN instead. Similarly, in some examples, some or all of the various operations described as being performed by RAN may be performed by the UTM or USS instead.

As discussed further below, in some examples the example message flow sequence 300 may be triggered by RAN or UTM after the UAV has taken off from the ground (i.e. when the UAV is airborne), although, as will be appreciated, the RAN or UTM may also trigger the UAV to take off from the ground. The example message flow sequence 300 represents various example approaches for enabling a radiation pattern of an antenna apparatus of the UAV to be determined at RAN side for use in determining a UAV control strategy.

In some examples, message flow sequence 300 may be performed on request from the network. In some examples, message flow sequence 300 may be performed after every UAV take-off. In other examples, message flow sequence 300 may instead be performed every n take-offs and/or when a certain duration (e.g. m days) has passed since the last determination of the radiation pattern and/or when the UAV is caused to operate in a different (or previously unencountered) radio environment or network deployment scenario.

Once the UAV has taken off, the UTM may send signal 301 to the UAV requesting that the UAV manoeuvres into line-of-sight of a base station which is currently serving the UAV (i.e. the 'serving cell' of the UAV). In some examples, signal 301 may be sent from RAN instead. In some examples, this signal 301 may, for instance, include an indication of the serving base station, a location of the serving base station and or location to which the UAV should navigate. As discussed with reference to Figure 2, this signal 301 (or a separate signal) may, in some examples, include a reference orientation into which the UAV should orient itself. Alternatively, this information could be pre-stored at the UAV.

At operation 302, in response to receiving signal 301, the UAV may be caused to manoeuvre such that its antenna apparatus is within line-of-sight of the base station which is currently serving the UAV. For instance, with knowledge of the base station locations, simply manoeuvring so as to cause the altitude of the UAV to increase may be sufficient to achieve this. In some examples, the UAV may also orient itself with the appropriate orientation.

Once the UAV is within line-of-sight of the base station and, in some examples, is correctly oriented, RAN (or UTM/USS) may send signal 303 to the UAV. Signal 303 may include information indicative of a value for use in orienting the UAV during transmission of signals from the base station to the UAV. The function of this signal and the information included may be as discussed above with reference to Figure 2. For instance, the information may be indicative of the angular intervals at which measurements are to be performed (or signals transmitted) by the UAV. In alternative embodiments, the value indicated by signal 303 may be preconfigured at the UAV.

At operation 305a, RAN may cause transmission of signals from the base station to an antenna apparatus of the UAV. For instance, the transmitted signals may be reference signals such as cell-specific reference signals (RS), beam-specific reference signals (SSB), dedicated demodulation reference signals (DM-RS) and/or other suitable reference signals. At operation 305b, the UAV may rotate while measuring the transmitted signals (e.g. the received power). For instance, the UAV may rotate between orientations according to the value indicated by signal 303 (e.g. but not limited to 5 degree intervals).

In some examples, multiple measurements may be performed when the UAV is at each of plural different orientations. In some such examples, a final measurement for one or more of the plural different orientations may be determined (e.g. but not limited to, a minimum, maximum, mean, median or mode of the multiple measurements).

In some implementations, operation 305b may take place in response to a signal 304 received at the UAV from the UTM requesting that the UAV starts to rotate while measuring the transmitted signals.

UTM may then send signal 306 to the UAV requesting that the UAV repeat operation 305b at a different height. In some examples, this may be performed after a determination, e.g. based on a date from the IMU of the UAV, that the UAV has performed a particular rotation at the first height. At operation 307, in response to receiving signal 306, the UAV may be caused to manoeuvre to the different height. In some examples, a previous height and/or the different height may be indicated by respective elevation angles from the base station.

At operation 308a (similarly to operation 305a), RAN may cause transmission of further signals (e.g. reference signals) from the base station to the antenna apparatus of the UAV. At operation 308b (similarly to operation 305b), the UAV may rotate while measuring the transmitted further signals (e.g. the received power). As before, the UAV may rotate between orientations using the value indicated by signal 303 (e.g. but not limited to 5 degree intervals). The UAV may perform substantially a complete rotation.

In some examples, operations 308a and 308b may be repeated for various different heights in order to obtain further knowledge of the vertical pattern of the antenna apparatus of the UAV. In addition or alternatively, as described above, the UAV may be caused to pitch in a horizontal axis by a certain angle for successive steps while rotating (e.g. alternating plus or minus Y (e.g. but not limited 10) degrees for each step). In some implementations, the angle used may be the same as the value indicated by signal 303. Alternatively, the angle may be pre-configured at the UAV or provided by the network.

In some examples, signals 301, 303, 304 and/or 306 maybe combined, and sent together from RAN or UTM/USS to the UAV. Put another way, in some examples, the information in two or more of signals 301, 303, 304 and/or 306 maybe sent as a single signal.

At operation 310, the radiation pattern of the antenna apparatus of the UAV maybe determined at RAN side, based on the measurements of the signals transmitted from the base station and received at the antenna apparatus of the UAV. In some examples, information indicative of the measurements is included in a signal 309 sent by the UAV to the base station. In some examples, signal 309 may further include information indicative of orientations of the UAV which correspond to the measurements. However, it will be appreciated that the information indicative of the measurements and the information indicative of the orientations may, in some examples, be included in separate signals instead.

Once the radiation pattern has been determined by RAN, signal 311 including information indicative of the radiation pattern may be sent to the CN for storage. In addition or alternatively, the radiation pattern maybe stored at RAN (e.g. but not limited to at a base station). In some examples, the radiation pattern may be stored together with a UAV identifier (ID) in a database. The stored radiation pattern may be provided upon request by the UTM or USS (or other CN entities), thereby allowing for re-use of this information when the UAV (or a similar UAV) is flown in similar radio environments. The stored radiation pattern may be used when operating the specific UAV for which the radiation pattern was determined. In some examples, the stored radiation pattern may be used when operating UAVs of the same type as the specific UAV. In some examples, the radiation pattern may be periodically re-determined. In some of those examples, the re-determined radiation pattern may be compared with a previous radiation pattern to verify consistency of UAV radio modem behaviour.

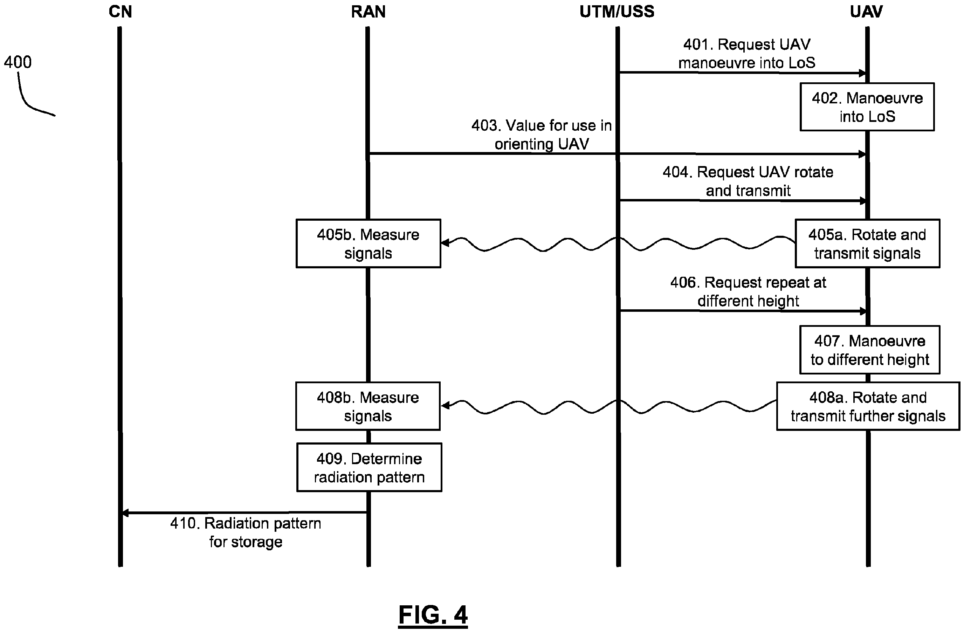

Figure 4 is a message flow sequence, indicated generally by the reference numeral 400, in accordance with some examples of the described technology. The message flow sequence 400 illustrates various examples of a process such as that described with reference to Figure 2 above. As will be appreciated, one of the main differences between the approaches illustrated by Figure 3 and those illustrated by Figure 4 is that in Figure 4, the signals that are measured for determining the radiation pattern are transmitted from the UAV to the base station(s), rather than the base station(s) to the UAV. Accordingly, it will be appreciated that many of the signals and/or operations described with reference to Figure 4 may be the same or substantially the same as those described with reference to Figure 3.

The message flow sequence 400 shows a signalling procedure between a core network (CN), a radio access node (RAN), an uncrewed aircraft system (UAS) traffic management (UTM) and a UAV. In some examples, the UAV may be under the control of the UTM, UAS service supplier (USS) and/or a UAV controller. The UAV and the RAN may, for example, be the UAV 200 and at least one base station 205 of the process described with reference to Figure 2 above.

Whilst various operations are described below as being performed by the UTM or USS, in some examples some or all of these operations may be performed by RAN instead. Similarly, in some examples, some or all of the various operations described as being performed by RAN may be performed by the UTM or USS instead.

As discussed further below, the example message flow sequence 400 may be initiated by RAN or UTM after the UAV has taken off from the ground (i.e. when the UAV is airborne). The example message flow sequence 400 represents various example approaches for enabling a radiation pattern of an antenna apparatus of the UAV to be determined at RAN side for use in determining a UAV control strategy.

In some examples, message flow sequence 400 may be performed after every UAV take-off. In other examples, message flow sequence 400 may instead be performed every n take-offs, and/or when a certain duration (e.g. every m days) has passed since the last determination of the radiation pattern and/or on request from the network.

Once the UAV has taken off, the UTM may send signal 401 to the UAV requesting that the UAV manoeuvres into line-of-sight of a base station which is currently serving the UAV (i.e. the 'serving cell' of the UAV). In some examples, signal 401 may be sent from RAN instead. Signal 401 may be the same as signal 301 described with reference to Figure 3.

At operation 402, in response to receiving signal 401, the UAV may be caused to manoeuvre such that its antenna apparatus is within line-of-sight of the base station which is currently serving the UAV. For instance, with knowledge of the base station locations, simply manoeuvring so as to cause the altitude of the UAV to increase may be sufficient to achieve this. Operation 402 may be the same as operation 302 described with reference to Figure 3.

Once the UAV is within line-of-sight of the base station, RAN (or UTM/USS) may send signal 403 to the UAV. Signal 403 includes information indicative of a value (e.g. 5 degrees) for use in orienting the UAV during transmission of signals from the UAV to the base station. In alternative embodiments, the value indicated by signal 403 may be preconfigured at the UAV. Signal 403 may be the same as signal 303 described with reference to Figure 3.

At operation 405a, the UAV may rotate while transmitting signals from an antenna apparatus of the UAV to the base station. The UAV may transmit one or more signals at each of plural orientations as it rotates. The transmitted signals may, for instance, be beacon signals, such as uplink sounding reference signals (SRS), uplink dedicated demodulation reference signals (DM-RS) and/or other suitable signals. In particular, the UAV may rotate between orientations based on the value indicated by signal 403 (e.g. in 5 degree intervals). At operation 405b, RAN may cause measurement of the transmitted signals at the base station (e.g. the received power).

In some examples, multiple measurements may be performed when the UAV is at each of plural different orientations. In some such examples, a final measurement for one or more of the plural different orientations may be determined (e.g. but not limited to, a minimum, maximum, mean, median or mode of the multiple measurements).

In some implementations, operation 405a may take place in response to a signal 404 received at the UAV from the UTM requesting that the UAV starts to rotate while transmitting the signals.

UTM may then send signal 406 to the UAV requesting that the UAV repeat operation 405a at a different height. Signal 406 may be similar to signal 306 described with reference to Figure 3. At operation 407, in response to receiving signal 406, the UAV may be caused to manoeuvre to the different height. In some examples, a previous height and/or the different height may be indicated by respective elevation angles from the base station.

At operation 408a (similarly to operation 405a), the UAV may rotate while transmitting further signals (e.g. beacon signals) from the antenna apparatus of the UAV to the base station. The UAV may transmit one or more signals at each of plural orientations as it rotates. As before, the UAV may rotate between orientations using the value indicated by signal 403 (e.g. but not limited to 5 degree intervals). At operation 408b (similarly to operation 405b), RAN may cause measurement of the transmitted further signals at the base station.

In some examples, operations 408a and 408b may be repeated for various different heights in order to obtain further knowledge of the vertical pattern of the antenna apparatus of the UAV. In addition or alternatively, as described above, the UAV may be caused to pitch in a horizontal axis by a certain angle for successive steps while rotating (e.g. alternating plus or minus 10 degrees for each step). In some implementations, the angle used may be the same as the value indicated by signal 403. Alternatively, the angle may be pre-configured at the UAV or provided by the network.

In some examples, signals 401, 403, 404 and/or 406 maybe combined, and sent together from RAN or UTM/USS to the UAV. Put another way, in some examples, one or more of signals 401, 403, 404 and/or 406 may be sent as a single signal.

At operation 409, the radiation pattern of the antenna apparatus of the UAV may be determined at RAN side, based on the measurements of the signals transmitted from the antenna apparatus of the UAV and received at the base station.

Once the radiation pattern has been determined by RAN, signal 410 including information indicative of the radiation pattern may be sent to the CN for storage. In some examples, the radiation pattern may be stored together with a UAV identifier (ID) in a database. The stored radiation pattern may be provided upon request by the UTM or USS (or other CN entities), thereby allowing for re-use of this information when the UAV (or a similar UAV) is flown in similar radio environments. The stored radiation pattern may be used when operating the specific UAV for which the radiation pattern was determined. In some examples, the stored radiation pattern may be used when operating UAVs of the same type as the specific UAV. In some examples, the radiation pattern may be periodically re-determined. In some of those examples, the re-determined radiation pattern may be compared with a previous radiation pattern to verify consistency of UAV radio modem behaviour.

Figure 5 illustrates an alternative example process for determining a radiation pattern of an antenna apparatus of a UAV. The process illustrated in Figure 5 may be particularly suitable for use with UAVs that are unable to hover and rotate (such as certain winged UAVs), but may also be used by UAVs, such as described with reference to Figures 1 to 4, that are able to hover and rotate.

In the example of Figure 5, a UAV 500 is shown in communication with base stations 505a-c of a cellular network, in this case via transmission of signals 502a-d (e.g. radio signals). Unlike UAV 200, UAV 500, which is depicted as a winged UAV may be unable to hover and rotate. As such, in the example of Figure 5, a radiation pattern of antenna apparatus 501 of UAV 500 is determined based on measurements (e.g. power measurements) of the signals 502a-d transmitted between multiple different base stations and the UAV 500 as it flies. In some examples, the radiation pattern may be determined based on measurements of multiple signals 502b-c transmitted between a single base station 505b and the UAV 500 as it flies. For instance, UAV 500 may follow a route (e.g. but not limited to a route provided by the network) around a particular base station. In some such examples, measurements of the signals may be performed at various points along the route.

In some examples, the transmitted signals 502a-d comprise signals transmitted from antenna apparatus 501 of UAV 500 and received at base stations 505a-c. In other examples, the transmitted signals 502a-d comprise signals transmitted from base stations 505a-c and received at antenna apparatus 501 of UAV 500.

In some examples, the measurements of the transmitted signals 502a-d may correspond to a respective position and orientation (or heading) of UAV 500, as well as a respective base station of the base stations 505a-c. For instance, one or more measurements may be performed while the UAV is at each of plural different positions and/or orientations. In the case that the signals 502a-d are transmitted from antenna apparatus 501 of UAV 500 and received at base stations 505a-c, these measurements may be performed at the base stations. In the case that the each of signals 502a-d is transmitted from a respective one of base stations 505a-c and received at antenna apparatus 501 of UAV 500, these measurements may be performed at UAV 500. In this latter case, information indicative of the measurements of the signals 502 may then be transmitted from UAV 500 (e.g. to any of base stations 505a-c) for use in determining the radiation pattern.

As illustrated in Figure 5, UAV 500 may pass various base stations as it flies. As UAV 500 passes each base station, signals transmitted between antenna apparatus 501 of UAV 500 and the base station being passed may be measured. Details of these measurements, in some examples including a time and/or UAV location and heading corresponding to the measurement, together with the location of the relevant base station may be used in determining the radiation pattern. In some implementations, the locations of the base stations may be provided to the UAV by RAN such that the antenna apparatus radiation pattern can be determined at the UAV itself. As will be appreciated, in some examples, multiple measurements may be performed while the UAV has substantially the same position and orientation. For instance, plural measurements may be performed in quick succession when the UAV is communicating with a particular base station.

In Figure 5, by way of example only, UAV 500 is shown in flight along a route indicated by the dashed line, with the direction of travel of UAV 500 indicated by the arrows. In some examples, the route may be provided by the cellular network. In some examples, the route may be provided by RAN or UTM/USS. At time 510, UAV is positioned in the vicinity of base stations 505a and 505b, signal 502a is transmitted between antenna apparatus 501 of UAV 500 and base station 505a, and signal 502b is transmitted between antenna apparatus 501 of UAV 500 and base station 505b. At time 520, UAV is positioned in the vicinity of base station 505b, and signal 502c is transmitted between antenna apparatus 501 of UAV 500 and base station 505b. At time 530, UAV is positioned in the vicinity of base station 505c, and signal 502c is transmitted between antenna apparatus 501 of UAV 500 and base station 505c.

The measurements of the transmitted signals 502a-d may, in some examples, include one or more of: power measurements, path loss measurements, quality measurements, reference signal received power measurements, reference signal received quality measurements, and/or received signal strength indicator measurements.

In some examples, during the transmission of the signals 502a-d between antenna apparatus 501 of UAV 500 and base stations 505a-c, UAV 500 may be caused to manoeuvre from a first height to a second height while following a given route. In such examples, the measurements of the transmitted signals may comprise a first plurality of measurements of the transmitted signals taken while the UAV is at the first height, measurements of the first plurality corresponding to respective positions and orientations of the UAV during the transmission of the signals 502a-d between the antenna apparatus 501 of the UAV 500 and the base stations 505a-c. In this case, UAV 500 may be caused to re-fly all or a portion of the given route at the second height thereby to obtain a second plurality of measurements of the transmitted signals 502a-d taken while UAV 500 is at the second height, measurements of the second plurality substantially corresponding to one of the respective position and orientation pairs to which the measurements of the first plurality correspond. By manoeuvring UAV 500 vertically in this way, it may be possible to obtain knowledge of the vertical pattern of antenna apparatus 501.

The antenna apparatus 501 of UAV 500 may have a plurality of beams. For instance, each beam of the plurality of beams may correspond to a respective antenna of the antenna apparatus 501. The measurements of the transmitted signals may include at least one measurement of a signal (or signals) transmitted between antenna apparatus 501 of UAV 500 and the base stations 505a-c via a first beam of the plurality of beams, and at least one measurement of a signal (or signals) transmitted between antenna apparatus 501 of UAV 500 and base stations 505a-c via a second beam of the plurality of beams. In some examples, a radiation pattern may be determined for all or a subset of the beams together. In addition or alternatively, an individual radiation pattern for each beam (or the respective antenna of the antenna apparatus corresponding to the beam) may be determined.

As described above, a radiation pattern of antenna apparatus 501 of UAV 500 is determined based on the measurements of the transmitted signals 502a-d. The determined radiation pattern is then stored for use in determining a UAV control strategy (e.g. a route for UAV 500 to follow). For instance, the radiation pattern may be stored together with a UAV identifier (ID) in a database. In some examples, this database may be maintained by a core network (CN) entity (such as UTM, USS, or a server). The stored radiation pattern may be provided upon request by the UTM or USS, thereby allowing for re-use of this information when the UAV (or a similar UAV) is flown in similar radio environments. The stored radiation pattern may be used when operating the specific UAV 500 for which the radiation pattern was determined. In some examples, the stored radiation pattern may be used when operating UAVs of the same type as UAV 500. In some examples, the radiation pattern may be periodically re-determined. In some of those examples, the re-determined radiation pattern may be compared with a previous radiation pattern to verify consistency of UAV radio modem behaviour.

In some examples, determining the UAV control strategy may include one or more of: selecting a UAV serving cell, determining a UAV quality-of-service (QoS) prediction, determining a UAV route, determining a UAV orientation, determining a level of UAV uplink interference, and/or determining a level of UAV downlink interference. For instance, a UAV may not be allowed to take off unless a threshold QoS exists for a planned UAV route. In some examples, determining the UAV control strategy using the determined radiation pattern may be such as to reduce, minimise or even eliminate interference caused by and/or experienced by UAV 500.

In some examples, the UAV control strategy may include one or more of: a UAV route, a UAV waypoint, a UAV speed, a UAV rotation speed, a UAV heading, a UAV orientation, a UAV altitude, a UAV take-off time, a UAV landing time, a UAV transmission power, a UAV transmission frequency, a UAV control frequency, a UAV serving cell etc.

It will of course be appreciated that a message flow in accordance with an example implementation of aspects of a process such as that described with reference to Figure 5 may, in some examples, be similar to that described with reference to either of Figures 3 and 4. For instance, in some examples, one or more signals similar to signals 301, 303, 304, 306, 401, 403, 404, 406, and/or combinations of these signals may be received at UAV 500 from any of base stations 505a-c, a RAN or UTM/USS. In some examples, such as those in which UAV 500 performs measurements of signals 502a-d transmitted from one or more of base stations 505a-c, one or more signals similar to signal 309 may be received at any of base stations 505a-c, a RAN or UTM/USS from UAV 500. In some examples, one or more signals similar to signals 311, 410, or a combination thereof, may be received at CN from any of base stations 505a-c, a RAN or UTM/USS.

In some examples, such as those in which antenna apparatus has multiple beams, including but not limited to such examples described with reference to Figures 2 and 5 above, the measurements used to determine the radiation pattern of the antenna apparatus, may comprise measurements of signals transmitted between the antenna apparatus of the UAV and a base station of a serving cell and measurements of signals transmitted between antenna apparatus of the UAV and one or more base stations of one or more neighbouring cells. In some such examples, the measurements may be performed for all or a subset of the multiple beams.

In some examples, the cells may be assigned respective physical cell identities (PCIs). For instance, in the case where the UAV has multiple beams B₁ to B₄ and for multiple cells PCI_{X1} to PCI_{X4}, measurements performed at the UAV may fill a table similar to the below. As will be appreciated, the measurements in the table below could be repeated with the UAV at different orientations, locations and/or heights.

| Beam index | **PCI x₁** (Serving Cell) | **PCI x₂** (Neighbour Cell) | **PCI x₃** (Neighbour Cell) | **PCI x₄** (Neighbour Cell) | **PCI x₅** (Neighbour Cell) |
|---|---|---|---|---|---|
| B₁ | *RSRP*_{*X*1*B*1} | Not detected | *RSRP*_{*X*3*B1*} | *RSRP*_{*X*4*B*1} | *RSRP*_{*X*5*B*2} |
| B₂ | *RSRP*_{*X*1*B*2} | *RSRP*_{*X*2*B*2} | *RSRP*_{*X*3*B*2} | *RSRP*_{*X*4*B*2} | Not detected |
| B₃ | *RSRP*_{*X*1*B*3} | *RSRP*_{*X*2*B*3} | *RSRP*_{*X*3*B*3} | Not detected | *RSRP*_{*X*5*B*3} |
| B₄ | *RSRP*_{*X*1*B*4} | *RSRP*_{*X*3*B*4} | *RSRP*_{*X*3*B*4} | *RSRP*_{*X*4*B*4} | Not detected |

For instance, the values RSRP_{XiBk} may represent measurements performed by beam index j (i.e. the jth beam), on cell with PCI_{Xi}. Whilst the measurements in the table above are labelled "RSRP" measurements, it will of course be appreciated that any or all of these measurements could instead comprise one or more of power measurements, path loss measurements, quality measurements, reference signal received power measurements, reference signal received quality measurements, and/or received signal strength indicator measurements.

In some examples, the "not detected" values in the table above may be used to represent example instances in which a subset of PCIs are not detected by some beam index. In some examples, the values contained in the table above may be included in a report to be sent to the network.

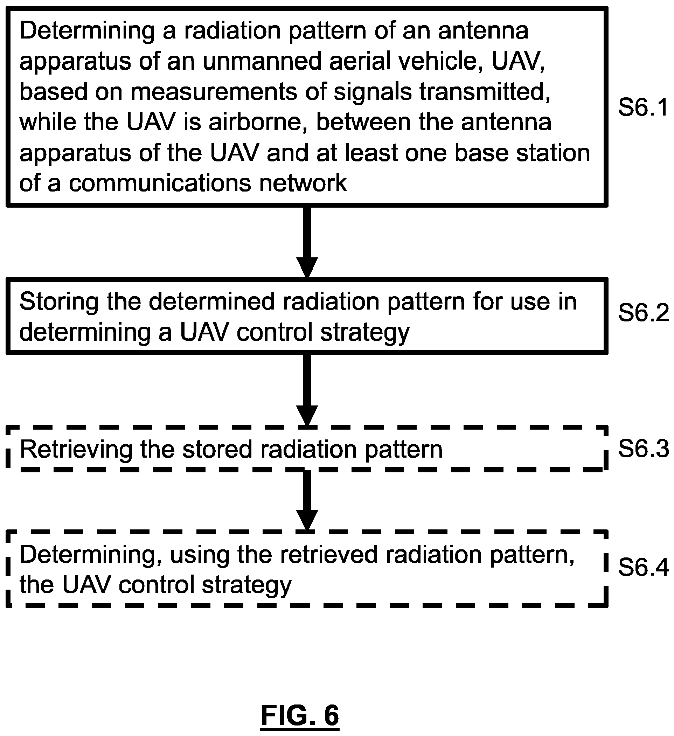

Figure 6 is a flowchart illustrating various operations which may be performed in accordance with example embodiments. For instance, the operations depicted in Figure 6 may be executed by a core network entity, a radio access network entity such as a base station, or other suitable computing apparatus (e.g. a server). As will of course be appreciated, various operations illustrated in Figure 6 correspond to operations already described with reference to the preceding Figures.

In operation S6.1, a radiation pattern of an antenna apparatus of an uncrewed aerial vehicle, UAV, is determined based on measurements of signals transmitted, while the UAV is airborne, between the antenna apparatus of the UAV and at least one base station of a cellular network.

As will be appreciated, the determination of operation S6.1 may be based on measurements performed in the manner described with reference to either of Figures 1 and 5. Similarly, as will also be appreciated, operation S6.1 may correspond with operation 310 or 409 of Figures 3 and 4 respectively. Accordingly, it will be appreciated that, in some examples, operation S6.1 of Figure 6 may be preceded by operations corresponding to some or all of operations 301 to 309 described with reference to Figure 3 or some or all of operations 401 to 408b described with reference to Figure 4.

In operation S6.2, the determined radiation pattern is stored for use in determining a UAV control strategy. As will be appreciated, operation S6.2 may correspond with either of operations 311 or 410 of Figures 3 and 4 respectively. For instance, the radiation pattern may be stored together with a UAV identifier (ID) in a database. In some examples, this database may be maintained by a core network (CN) entity (such as UTM, USS, or a server).

In operation S6.3, the stored radiation pattern may be retrieved.

In operation S6.4, the retrieved radiation pattern may be used to determine the UAV control strategy. In some examples, determining the UAV control strategy may include one or more of: selecting a UAV serving cell, determining a UAV quality-of-service (QoS) prediction, determining a UAV route, determining a UAV orientation, determining a level of UAV uplink interference, and/or determining a level of UAV downlink interference. For instance, a UAV may not be allowed to take off unless a threshold QoS exists for a planned UAV route. In some examples, determining the UAV control strategy using the determined radiation pattern may be such as to reduce, minimise or even eliminate interference caused by and/or experienced by the UAV.

In some examples, the UAV control strategy may include one or more of: a UAV route, a UAV waypoint, a UAV speed, a UAV rotation speed, a UAV heading, a UAV orientation, a UAV altitude, a UAV take-off time, a UAV landing time, a UAV transmission power, a UAV transmission frequency, a UAV control frequency, a UAV serving cell etc.

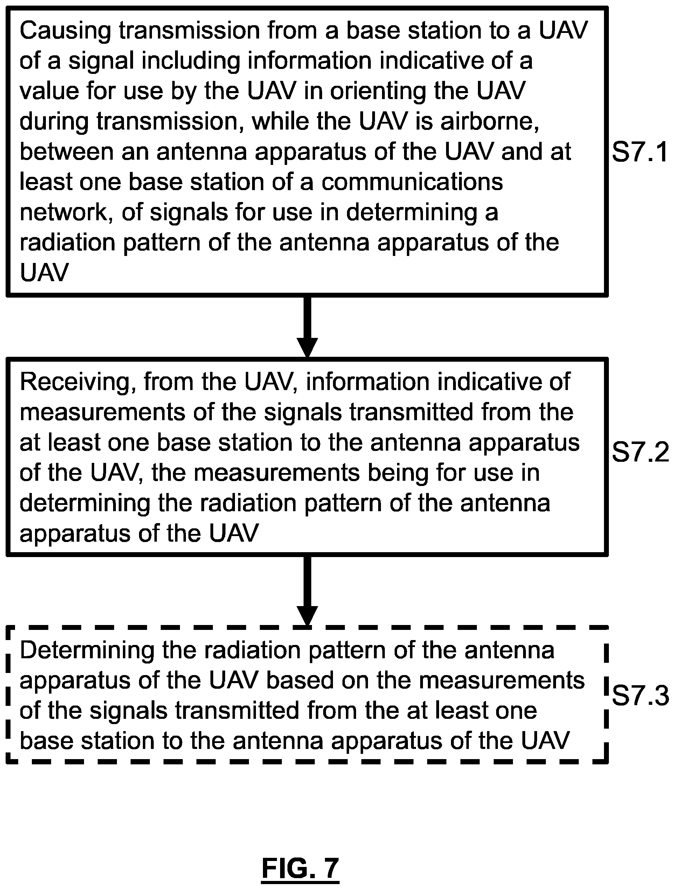

Figure 7 is a flowchart illustrating various operations which may be performed by one or more of a core network entity, a radio access network entity such as a base station, or other suitable computing apparatus (e.g. a server). As will of course be appreciated, in some examples, different operations may be performed by different entities. In other examples, one or more of the operations may be performed by different entities.

In operation S7.1, a signal is caused to be transmitted from a base station to a UAV, the signal including information indicative of a value for use by the UAV in orienting the UAV during transmission, while the UAV is airborne, between an antenna apparatus of the UAV and at least one base station of a cellular network, of signals for use in determining a radiation pattern of the antenna apparatus of the UAV.

In some examples, such as those in which the transmitted signals comprise signals transmitted from the at least one base station to the antenna apparatus of the UAV, the method may comprise operation S7.2. Operation S7.2 may comprise receiving from the UAV information that is indicative of the measurements of the transmitted signals. In some examples, the method may further comprise receiving from the UAV information indicative of orientations of the UAV which correspond to the measurements. In some such examples, the information indicative of the measurements and the information indicative of the orientations may be received together (e.g. but not limited to, in the same signal). Alternatively, the information indicative of the measurements and the information indicative of the orientations may be received separately instead.

In some examples, the method may comprise operation S7.3. In operation S7.3 the radiation pattern of the antenna apparatus of the UAV may be determined based on the information received from the UAV that is indicative of the measurements of the transmitted signals. The radiation pattern may then be stored for use in determining a UAV control strategy.

As will be appreciated, operation S7.1 may be performed without operation S7.2 also being performed. This may occur for instance when an entity (such as a base station or a suitable computing apparatus) is caused to transmit a signal including information indicative of a value for use in orienting the UAV, but the signals for use in determining the radiation pattern are transmitted from the UAV.

Similarly, operation S7.2 may be performed without operation S7.1 also being performed. This may occur for instance when a value for use in orienting the UAV during transmission of the signals for use in determining the radiation pattern is pre-configured at the UAV, but an entity (such as a base station or a suitable computing apparatus) receives information indicative of measurements of the signals.

As will of course be appreciated, various operations illustrated in Figure 7 may correspond to operations already described with reference to the preceding Figures. For instance, operation S7.1 may correspond to either of operations 303 and 403 of Figures 3 and 4 respectively. Likewise, operation S7.2 may correspond to operation 309 of Figure 3. Operation S7.3 may correspond to operation 310 of Figure 3 or operation 409 in Figure 4.

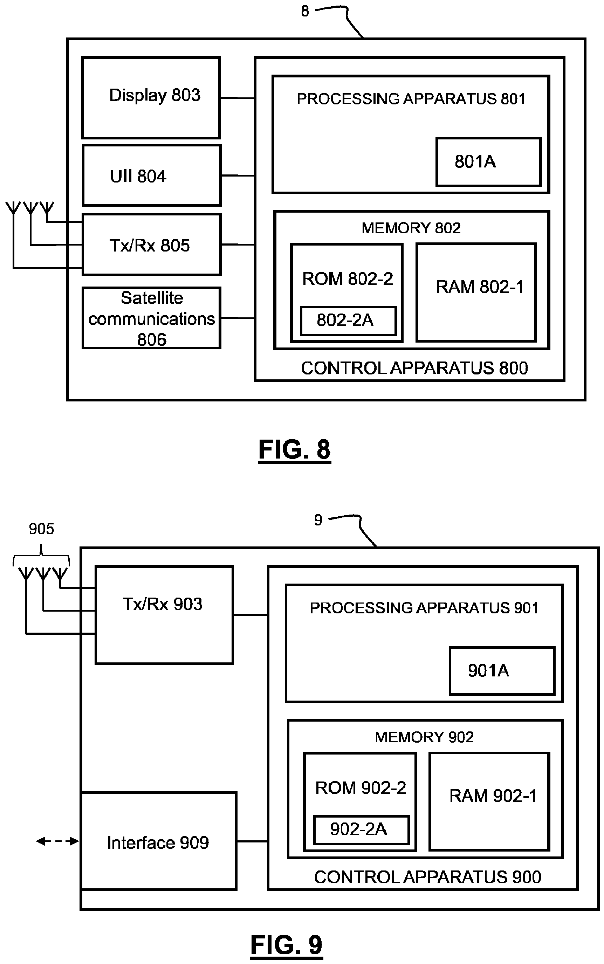

Figure 8 is a schematic illustration of an example configuration of a computing apparatus 8 which may be configured to perform various operations described with reference to Figures 1 to 7.

Computing apparatus may comprise control apparatus 800 which is configured to control operation of other components which form part of the computing apparatus 8 thereby to enable performance of various operations described with reference to Figures 1 to 7. The computing apparatus 800 may comprise processing apparatus 801 and memory 802. Computer-readable code 802-2A may be stored on the memory 802, which when executed by the processing apparatus 801, causes the control apparatus 800 to perform any of the operations described herein.

In addition, computing apparatus may further include a display 803, user interactive interface (UII) 804, radio frequency interface 805 and global navigation satellite system (GNSS) 806. In some examples, other satellite communications systems may be used instead of or in addition to GNSS 806.

Figure 9 is a schematic illustration of an example configuration of a base station 9 which may be configured to perform various operations described with reference to Figures 1 to 7.

The base station 9, which may be referred to an eNB or access point (AP), comprises control apparatus 900 which is configured to control operation of other components which form part of the base station 9 thereby to enable transmission of signals to and receipt of signals from UEs in its coverage area vicinity. For example, the base station control apparatus 900 is configured to cause transmission of reference signals to UEs within its coverage area. Furthermore, in some examples, the control apparatus 900 may be configured to enable receipt of reference signal measurement data and/or location data from the UEs in its coverage area. The control apparatus 900 may also enable communication with other base stations and/or other network nodes. The control apparatus 900 may additionally be configured to cause performance of any other operations described herein with reference to the base station 9.

The base station 9 comprises a radio frequency antenna array 905 configured to receive and transmit radio frequency signals. Although the base station 9 in Figure 9 is shown as having an array 905 of three antennas, this is illustrative only. The number of antennas may vary, for instance, from one to many hundreds.

The base station 9 further comprises a radio frequency interface 903 configured to interface the radio frequency signals received and transmitted by the antenna 905 and a control apparatus 90. The radio frequency interface 903 may also be known as a transmitter, receiver and/or transceiver. The base station 9 may also comprise an interface 909 via which, for example, it can communicate with other network elements such as other radio access network entities (such as the other base stations) and/or core network entities.

The base station control apparatus 900 may be configured to process signals from the radio frequency interface 903, to control the radio frequency interface 903 to generate suitable RF signals to communicate information to UEs via the wireless communications link, and also to exchange information with other base stations 9 and core network entities via the interface 909.

The control apparatus 900 may comprise processing apparatus 901 and memory 902. Computer-readable code 902-2A may be stored on the memory 902, which when executed by the processing apparatus 901, causes the control apparatus 900 to perform any of the operations described herein and attributed to the base station 9.

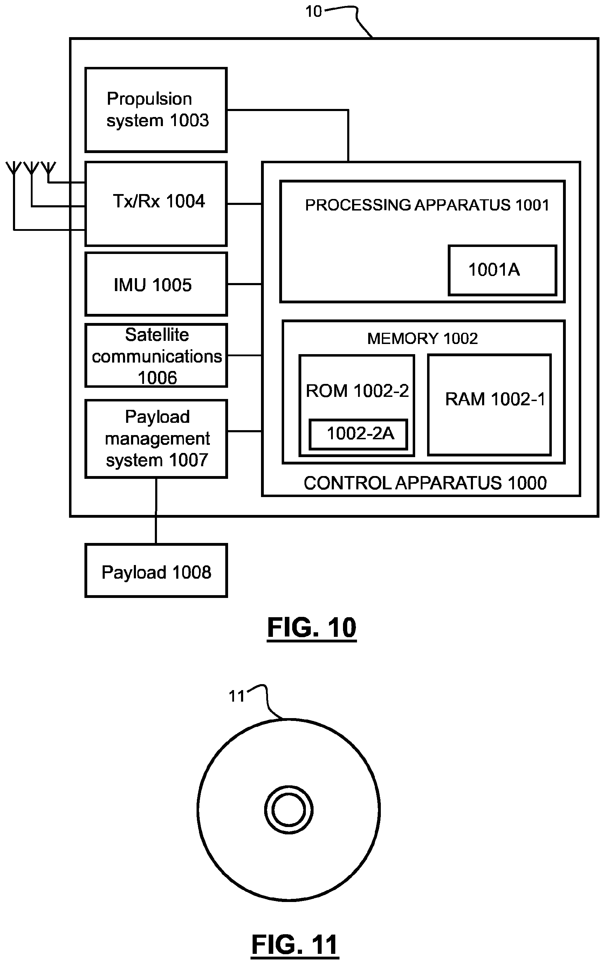

Figure 10 is a schematic illustration of an example configuration of a UAV 10. The UAV 10 may be any UAV capable of at least sending radio signals to (and in some examples receiving signals from the base stations 9 and of performing the various operations described above with respect to UAVs, for instance with reference to Figures 1 to 7.

The UAV 10 comprises control apparatus 1000 for controlling the other components of the UAV 10. In particular, the control apparatus 1000 is configured to enable communication with one or more base stations 9 in the vicinity, including receipt of reference signals. The control apparatus 1000 may be configured to cause transmission of signal measurement data and/or other data to the base stations.

The UAV control apparatus 1000 may comprise processing apparatus 1001 and memory 1002. Computer-readable code 1002-2A may be stored on the memory, which when executed by the processing apparatus 1001, causes the control apparatus 1000 to perform any of the operations described herein in relation to the UAV 10. Example configurations of the memory 1002 and processing apparatus 1001 will be discussed in more detail below.

The UAV 10 may, in some instances, further comprise a propulsion system 1003 for manoeuvring UAV 10.

The UAV 10 may communicate via an appropriate radio interface arrangement 1004. The interface arrangement 1004 may be provided for example by means of a radio part (e.g. a transceiver) and an associated antenna arrangement. The antenna arrangement may be arranged internally or externally to the UAV 10.

The UAV 10 may, in some instances, further comprise an IMU module 1005 for determining at least an orientation of the UAV 10. This module 1005 may include one or more of a gyroscope, accelerometer, magnetometer, compass, and/or other sensors suitable for determining an orientation of UAV 10.

The UAV 10 may, in some instances, further comprise a satellite communications module 1006 (e.g. but not limited to, a GPS module) for determining its geographic location. This module 1006 may determine the location of the UAV 10 in any suitable way.

The UAV 10 may, in some instances, further comprise a payload management system for securing a payload 1008. The payload 1008 may be secured inside or outside the UAV 10. The payload management system may comprise any suitable means for collecting, retaining, and/or dropping-off a payload 1008.

The UAV 10 may be any uncrewed aircraft that is provided with a wireless interface facility. For instance, the UAV 10 may be any of a fixed-winged aircraft, helicopter, multicopter (such as a tricopter, hexacopter or octocopter), ornithopter, gyrocopter, balloon or other aircraft.

Some further details of components and features of the above-described devices/entities/apparatuses 8, 9, 10 and alternatives for them will now be described.

The control apparatuses described above 800, 900, 1000 may comprise processing apparatus 801, 901, 1001 communicatively coupled with memory 802, 902, 1002. The memory 802, 902, 1002 has computer readable instructions 802-2A, 902-2A, 1002-2A stored thereon, which when executed by the processing apparatus 801, 901, 1001 causes the control apparatus 800, 900, 1000 to cause performance of various ones of the operations described with reference to Figures 1 to 7. The control apparatus 800, 900, 1000 may in some instance be referred to, in general terms, as "apparatus".

The processing apparatus 801, 901, 1001 may be of any suitable composition and may include one or more processors 801A, 901A, 1001A of any suitable type or suitable combination of types. Indeed, the term "processing apparatus" should be understood to encompass computers having differing architectures such as single/multi-processor architectures and sequencers/parallel architectures. For example, the processing apparatus 801, 901, 1001 may be a programmable processor that interprets computer program instructions 802-2A, 902-2A, 1002-2A and processes data. The processing apparatus 801, 901, 1001 may include plural programmable processors. Alternatively, the processing apparatus 801, 901, 1001 may be, for example, programmable hardware with embedded firmware. The processing apparatus 801, 901, 1001 may alternatively or additionally include one or more specialised circuit such as field programmable gate arrays FPGA, Application Specific Integrated Circuits (ASICs), signal processing devices etc. In some instances, processing apparatus 801, 901, 1001 may be referred to as computing apparatus or processing means.

The processing apparatus 801, 901, 1001 is coupled to the memory 802, 902, 1002 and is operable to read/write data to/from the memory 802, 902, 1002. The memory 802, 902, 1002 may comprise a single memory unit or a plurality of memory units, upon which the computer readable instructions (or code) 802-2A, 902-2A, 1002-2A is stored. For example, the memory 802, 902, 1002 may comprise both volatile memory 802-1, 902-1, 1002-1 and non-volatile memory 802-2, 902-2, 1002-2. In such examples, the computer readable instructions/program code 802-2A, 902-2A, 1002-2A may be stored in the non-volatile memory 802-2, 902-2, 1002-2 and may be executed by the processing apparatus 801, 901, 1001 using the volatile memory 802-1, 902-1, 1002-1 for temporary storage of data or data and instructions. Examples of volatile memory include random-access memory (RAM), dynamic random-access memory (DRAM), and synchronous dynamic random-access memory (SDRAM) etc. Examples of non-volatile memory include read-only memory (ROM), programmable read-only memory (PROM), electronically erasable programmable read-only memory (EEPROM), flash memory, optical storage, magnetic storage, etc.

The memory 802, 902, 1002 may be referred to as one or more non-transitory computer readable memory medium or one or more storage devices. Further, the term 'memory', in addition to covering memory comprising both one or more non-volatile memory and one or more volatile memory, may also cover one or more volatile memories only, one or more non-volatile memories only. In the context of this document, a "memory" or "computer-readable medium" may be any media or means that can contain, store, communicate, propagate or transport the instructions for use by or in connection with an instruction execution system, apparatus, or device, such as a computer.

The computer readable instructions/program code 802-2A, 902-2A, 1002-2A may be pre-programmed into the control apparatus 800, 900, 1000. Alternatively, the computer readable instructions 802-2A, 902-2A, 1002-2A may arrive at the control apparatus via an electromagnetic carrier signal or may be copied from a physical entity 10 such as a computer program product, a memory device or a record medium such as a compact disc read-only memory (CD-ROM) or digital versatile disc (DVD) an example of which is illustrated in Figure 11. The computer readable instructions 802-2A, 902-2A, 1002-2A may provide the logic and routines that enables the entities devices/apparatuses 8, 9, 10 to perform the functionality described above. The combination of computer-readable instructions stored on memory (of any of the types described above) may be referred to as a computer program product. In general, references to computer program, instructions, code etc. should be understood to express software for a programmable processor firmware such as the programmable content of a hardware device as instructions for a processor or configured or configuration settings for a fixed function device, gate array, programmable logic device, etc.

If desired, the different functions discussed herein may be performed in a different order and/or concurrently with each other. Furthermore, if desired, one or more of the above-described functions may be optional or may be combined. Similarly, it will also be appreciated that the flow diagrams of Figures 6 and 7 are examples only and that various operations depicted therein may be omitted, reordered and/or combined.

Although the methods and apparatuses have been described in connection with an E-UTRA network, it will be appreciated that they are not limited to such networks and are applicable to radio networks of various different types.

Although various aspects of the methods and apparatuses described herein are set out in the independent claims, other aspects may comprise other combinations of features from the described embodiments and/or the dependent claims with the features of the independent claims, and not solely the combinations explicitly set out in the claims.

It is also noted herein that while various examples are described above, these descriptions should not be viewed in a limiting sense. Rather, there are several variations and modifications which may be made without departing from the scope of the present invention as defined in the appended claims.

## Claims

1. Apparatus comprising means for:
determining a radiation pattern of an antenna apparatus of an uncrewed aerial vehicle, UAV, based on measurements of signals transmitted, while the UAV is airborne, between the antenna apparatus of the UAV and at least one base station of a communications network; and
causing storage of the determined radiation pattern for use in determining a UAV control strategy.

2. The apparatus of claim 1, wherein the measurements of the signals transmitted correspond to respective orientations of the UAV during transmission of the signals between the antenna apparatus of the UAV and the at least one base station.

3. The apparatus of claim 2, wherein, during transmission of the signals between the antenna apparatus of the UAV and the at least one base station, the UAV is caused to rotate through the respective orientations.

4. The apparatus of claim 3, wherein the UAV is caused to rotate through the respective orientations by performing a complete rotation, optionally wherein performance of the complete rotation by the UAV is verified using data from at least one sensor of an inertial measurement unit, IMU, of the UAV.

5. The apparatus of any one of claims 2 to 4, wherein a signal including information indicative of a value for use by the UAV in orienting the UAV during transmission of the signals between the antenna apparatus of the UAV and the at least one base station is transmitted to the UAV, and/or
wherein the determination of the radiation pattern is further based on information indicative of the respective orientations received from the UAV.

6. The apparatus of any one of claims 2 to 5, wherein the measurements of the transmitted signals comprise measurements of signals transmitted from the at least one base station and received at the antenna apparatus of the UAV, and
wherein the radiation pattern is determined based on information received from the UAV that is indicative of the measurements of the signals transmitted from the at least one base station and received at the antenna apparatus of the UAV.

7. The apparatus of any one of claims 2 to 6, wherein the measurements of the transmitted signals comprise measurements of signals transmitted from the antenna apparatus of the UAV and received at the at least one base station.

8. The apparatus of any one of claims 1 to 7, wherein the means are further configured for performing:
retrieving the stored radiation pattern; and
determining, using the retrieved radiation pattern, the UAV control strategy.

9. The apparatus of any one of claims 1 to 7, wherein determining the UAV control strategy includes one or more of: selecting a UAV serving cell, determining a UAV quality-of-service prediction, determining a UAV route, determining a UAV orientation, determining a level of UAV uplink interference, and/or determining a level of UAV downlink interference.

10. The apparatus of any one of claims 1 to 9, wherein, during the transmission of the signals between the antenna apparatus of the UAV and the at least one base station, the UAV is caused to manoeuvre from a first height to a second height,
optionally wherein the measurements of the transmitted signals comprise:
a first plurality of measurements of the transmitted signals performed while the UAV is at the first height, the measurements of the first plurality corresponding to respective orientations of the UAV during the transmission of the signals between the antenna apparatus of the UAV and the at least one base station, and
a second plurality of measurements of the transmitted signals performed while the UAV is at the second height, the measurements of the second plurality corresponding to the respective orientations.

11. The apparatus of any one of claims 1 to 10, wherein the measurements of the signals transmitted between the antenna apparatus of the UAV and the at least one base station include a measurement of a signal transmitted between the antenna apparatus of UAV and a first base station of the at least one base station, and a measurement of a signal transmitted between the antenna apparatus of the UAV and a second base station of the at least one base station.

12. The apparatus of any one of claims 1 to 11, wherein the antenna apparatus of the UAV has a plurality of beams, and
wherein the measurements of the signals transmitted between the antenna apparatus of the UAV and the at least one base station include a measurement of a signal transmitted between the antenna apparatus of the UAV and the at least one base station via a first beam of the plurality of beams, and a measurement of a signal transmitted between the antenna apparatus of the UAV and the at least one base station via a second beam of the plurality of beams.

13. A radio access network entity or a core network entity comprising the apparatus of any one of claims 1 to 12.

14. A method comprising:
determining a radiation pattern of an antenna apparatus of an uncrewed aerial vehicle, UAV, based on measurements of signals transmitted, while the UAV is airborne, between the antenna apparatus of the UAV and at least one base station of a communications network; and
causing storage of the determined radiation pattern for use in determining a UAV control strategy.

15. An uncrewed aerial vehicle, UAV, comprising at least one processor and at least one memory including computer program code, the at least one memory and the computer program code being configured to, with the at least one processor, cause the UAV at least to perform:
measuring signals received at an antenna apparatus of the UAV from at least one base station while the UAV is airborne, the measurements of the signals corresponding to respective orientations of the UAV, relative to the at least one base station, during receipt of the signals, and sending to a communications network information indicative of the measurements for use in determining a radiation pattern of the antenna apparatus of the UAV; or
transmitting signals from an antenna apparatus of the UAV to at least one base station while the UAV is airborne, the transmitted signals corresponding to respective orientations of the UAV, relative to the at least one base station, during transmission of the signals and being for use in determining a radiation pattern of the antenna apparatus of the UAV.
